# EUROPEAN PATENT APPLICATION

(11) **EP 1 116 938 A1**
(43) Date of publication of application: **18.07.2001**
(21) Application number: 00830006.3
(22) Date of filing: 11.01.2000
(51) Int. Cl.: G01F 1/26, G01F 1/06, B01D 35/143

(54) **Multifunctional filter for waterworks with pressure and flow rate sensors**

(71) Applicant: Aqua S.r.l., 42018 San Martino in Rio Re (IT)
(72) Inventor: Antonacci, Domenico, 56021 Cascina PI (IT)
(74) Representative: Celestino, Marco

(57) **Abstract**

A multifunctional filter for waterworks, comprising a containing body (1) having at least a inlet (21) and an outlet (22) for liquid, at least a filter cartridge (40), sensors of pressure (34,35) and of flow rate (27,28,32a) arranged in the body (1), electronically programmable means (32) connected with an external device, such as a motor pump, for switching it on or off responsive to signals coming from the sensors. The body (1) can be formed by a head (20) having the inlet (21) and the outlet (22), a lid (30) that stops the head (20) and houses the electronically programmable means (32) and the sensors, a cartridge container (10) releasably fastened to the head (20) for pushing the filter cartridge (40) against the head, chambers of passage (23a,26,29) of the liquid flow to be filtered made in the head (20). The sensors can be integrated on a programmable board (32). The filter has the advantage of being compact, easily installed and substituting other devices not necessary any more, such as flow control or litre counting devices.

## Description

### Field of the invention

The present invention relates to a multifunctional filter for waterworks, for example for water supplies where the network pressure is unsteady.

### Background of the invention

In many waterworks the network pressure is not sufficient for the various uses and auxiliary motor pumps are necessary.

For driving these motor pumps, which start when there is water demand and stop when all the points of use do not need any more water from the waterwork, systems that control the flow conditions are known.

Normally, these systems provide a pressure control by means of pressure switches. The pump is operated when the pressure decreases under a predetermined threshold. In this case expansion tanks are often used that avoid a continuous on-off operation of the pump.

However, the pressure switches associated to the expansion tanks are subject to adjustment and breakage problems, that are expensive and require extra work.

Integrated systems are also known with flow control devices, that measure the pressure and the flow rate. These systems are arranged in series in the waterwork downstream motor pump. These devices are expensive, since they have several sensors for measuring the flow rate or the absence of flow. Normally, the existing devices provide at least two magnet sensors.

In many cases, moreover, a waterwork needs a mechanical filter for cleaning the circuit from debris. Therefore, existing water supplies that have flow control valves also require the installation of two different devices: the mechanical filter and the flow control system.

Furthermore water meters are known to be mounted in waterworks, provided separately from the pressure control devices, flow presence devices and from filters.

### Summary of the invention

It is an object of the present invention to provide a filter suitable for being installed in waterworks that has further integrated functions for controlling the efficiency of the water supply.

It is another object of the present invention to provide a filter that in particular can drive the start and/or the stop of an external device or of a machine to it connected, such as in particular a motor pump.

These and other objects are achieved from the filter according to the present invention whose characteristic is that it comprises:
- a container body having at least an inlet and an outlet for the liquid;
- at least a filter cartridge arranged between the inlet and the outlet;
- liquid pressure and flow rate sensor means in the body;
- electronically programmable means, electrically connected with an external device and suitable for operating or stopping said external device responsive to signals coming from the sensors.

The external device can be in particular, but not exclusively, a motor pump.

Preferably, the sensor means are arranged in the body between the filter cartridge and the outlet mouth.

The body is preferably formed by
- a head in which the inlet and outlet openings are made,
- a lid that stops the head and houses the electronically programmable means and the sensor means;
- a cartridge container, releasably fastened to the head and suitable for pushing the filter cartridge against the head ;
- flow chambers made in the head so that the cartridge is located between the inlet mouth and the outlet mouth.

In a preferred embodiment, the sensor means and the electronically programmable means are integrated on a single electronic board or in a single microchip. Preferably, the electronic board comprises two microcircuits for detecting of flow rate and pressure.

The pressure sensor means can comprise a piston slidable with respect to the body and pushed at one side by resilient means and at another side by the pressure of the liquid present in the body, the piston operating a switch associated to the electronic control means.

The flow rate sensor means can comprise a movable element with respect to the body proportionally to the flow, the measure of the flow rate being obtained from the measure of the movement of this movable element.

Alternatively, the flow rate sensor means comprise a impeller that rotates in the body, counter means being provided for detecting the speed of the impeller, whereby it is possible to determine the speed of the fluid and/or the amount of fluid that passes through the filter in a certain time.

Always preferably, on the body light means are mounted for signalling the operation of the filter responsive to signals coming from the sensors.

### Brief description of the drawings

Further characteristics and the advantages of the multifunctional filter according to the invention will be made clearer with the following description of an embodiment thereof, exemplifying but not limitative, with reference to attached drawings, wherein:
- figure 1 shows a cross sectional view of the multifunctional filter according to the invention;
- figure 2 shows a top plan view of the filter of figure 1.

### Description of a preferred embodiment

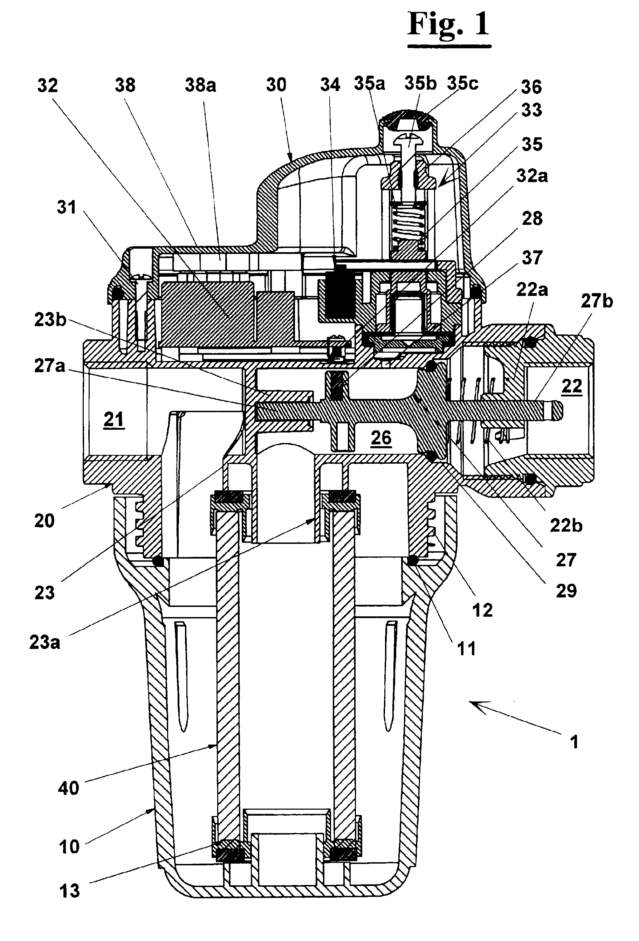

With reference to figure 1, a multifunctional filter according to the present invention comprises a container body 1 formed by a cartridge container 10 and by a head 20 sealingly connected, having a seal 11 and a coupling screw 12.

Head 20 has a inlet chamber 21. Furthermore, a outlet mouth 22 is screwed to head 20 opposite to inlet chamber 21. Head 20 is closed by a lid 30 connected by screw means 31.

In cartridge container 10 a filter cartridge 40 is housed compressed between two supports 13 and 23 integral respectively to cartridge container 10 and to head 20. Support 23 is axially open at 23a to allow the passage of the liquid through it.

Beyond axial opening 23a of support 23, head 20 has a intermediate chamber 26 substantially co-axial to inlet mouth 21 and to outlet mouth 22. In intermediate chamber 26 a valve 27 engages which has stems 27a and 27b slidingly connected respectively to a seat 23b in support 23 and to a support 22a at outlet mouth 22. A spring 22b co-axial to stem 27b is loaded against said sliding.

Valve 27 is capable of choking a outlet passage 29 between outlet mouth 22 and chamber 26 and has a magnet 28 associated to stem 27a.

Inlet chamber 21, intermediate chamber 26 and outlet passage 29 define a dividing wall between the upper part of head 20, closed by lid 30, and the lower part, crossed by the liquid.

Beyond this wall, in lid 30, an electronic board 32 is mounted comprising a sensor 32a, for example a proximity sensor of the type Read, associated to magnet 28.

Furthermore, a device 33 is provided comprising a microswitch 34 associated to a piston 35 slidable in a support 36 integral to head 20.

Piston 35 is pushed from the above towards below by a spring 35a and is pushed from below towards the above by the pressure of the liquid present in chamber 26 through a small hole 37. A screw 35b, accessible through a stopper 35c, adjusts the load of spring 35a.

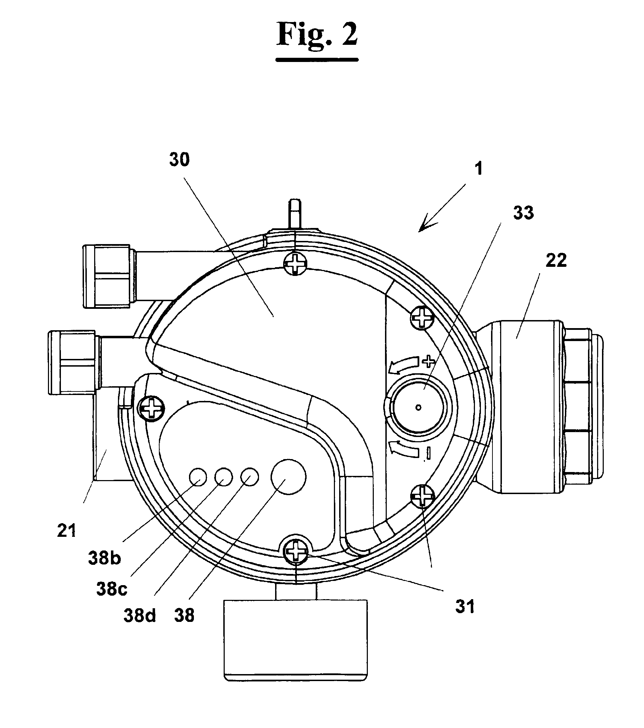

As shown also in figure 2, a portion 38 of lid 30 is flexible so that it can be pushed against a push button 38a for Reset. Furthermore, always on lid 30 so that they can be seen three LED of different colour 38b, 38c, 38d are mounted.

Board 32 is supplied electrically with means not shown, for example with 230 V 50/60 Hz supply. Furthermore, it is connected electrically with push button 38a and with microswitch 34, which, along with sensor 32a, they produce the inlet signals.

In a way not described in detail, but apparent for a man of the art, the following outputs are provided:
- a NC contact that is switched on for supplying the electrical motor of the motor pump, or to a desired other external device;
- LED 38b of a first colour, which signals the presence of electric voltage;
- LED 38c of a second colour, which signals the NC contact is switched on and then that the motor is working;
- LED 38d of a third colour, which signals the intervention of the system for protecting the pump;

The operation of the multifunctional filter according to the invention is the following.

The liquid, for example water, flows into body 1 through inlet chamber 21 and passes through cartridge 40 up to reaching chamber 26 through opening 23a and, through valve 27, outlet passage 29 and outlet mouth 22.

More precisely, when the liquid flows into chamber 26 it moves valve 27 and, by means of magnet 28, it operates flow sensor 32a. At the same time the liquid under pressure in chamber 26, through a small hole 37 operates piston 35 that in turn turns on microswitch 34.

Electronic board 32 controls the inputs and, responsive to these, switches on/off the external machine, in particular the motor pump.

Before that the motor pump is switched on, the pressure in chamber 26 is zero, and piston 35 is completely in the lower position pushed by spring 35a. In this position of piston 35 microswitch 34 is operated.

Valve 27 is closed pushed by spring 22b and magnet 28 operates Read sensor 32a.

If board 32 is under voltage and the pump (not shown) is connected through the NC contact to electronic board 32, the motor pump is switched on and starts working. LED 38b and 38c of the first and of the second colour are lighted on for signalling this status. If after a predetermined time, for example several seconds, the valve 17 has not moved or the pressure has not risen, and then the two inputs to board 32 coming from sensor 32a and from microswitch 34 are unchanged, this means that there is not liquid and the device and the motor is switched off, lighting on the LED of the third colour 38d.

Otherwise, the liquid is present and the device maintains the supply to the motor.

In operating conditions, can be two cases can occur.
A. The liquid flows normally and in the waterwork, downstream outlet 22, no uses are present, for example all the faucets are turned off.
   For this reason the liquid does not flow any more in the waterwork and magnet 28 turns in the rest position,
   Read sensor 32a is active again, the pressure rises and keeps piston 35 raised.
   Then board 32, after a predetermined delay (for example 10 seconds), switches off the electrical feeding of the motor, and the Led of the second colour lights off.
   To depart from this conditions it is necessary the presence of an use so that the pressure decreases under of a predetermined threshold that allows piston 35 to actuate microswitch 34. Otherwise, it is necessary to push RESET button 38a through flexible portion 38.
B. The fluid is lacking, for a desired reason, for example a well is dry or storage reservoir empty.
   Then also the pressure decreases, valve 27 turns back to rest position and piston 36 lowers and actuates microswitch 34.
   In this condition, the electronic device associated to board 32 recognises the absence of fluid and after a predetermined delay, for example 10 seconds, interrupts the electric supply to the motor and lights on the LED 38c of the third colour.
   To depart from this conditions it is necessary to push
   RESET button 38a turn off voltage and then on.
   This stop allows to control the conditions of the waterwork and to switch off the devices that would be damaged or could be dangerous for people and/or things if they worked without fluid.

According to a possible different embodiment, replacing valve 27 with an impeller not shown, magnet 28 rotates owing to the passage of the liquid. Electronic board 32 can be in this case programmed for counting the rotation pulses of magnet 28 detected by sensor 32a. With a easily programmable function for a man of the art set in board 32 the amount of water flowed through filter 40 can be counted and displayed.

In this way the following further useful functions can be provided:
- the measure of the amount of water allows to decide whether cartridge 40 has to be cleaned or replaced; this can be signalled by means of a further LED or by means of another electronic signal to an alarm device;
- the measure of the amount of water can be displayed; in this case the filter according to the invention is actually a litre counter;
- the absence of rotation of the impeller is a signal of absence of flow.

Obviously, the two flow control functions possible by means of the valve and the litre counting possible by means of the impeller can be obtained at the same time mounting an impeller on stem 27a of valve 27 and arranging two sensors on the board, one for flow control and one for litre counting. This way the function of stopping the flow that is possible by valve 27 is present that could not be possible with the impeller alone.

An advantageous aspect of the multifunctional filter according to the invention is that all the liquid that passes through the control devices above described has already been filtered by cartridge 40 and this increases the reliability of the devices same, which work with already filtered water.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Multifunctional filter for waterworks, comprising:
- a containing body (1) having at least an inlet (21) and an outlet (22) for a liquid;
- at least a filter cartridge (40) arranged between said inlet (21) and said outlet (22);
**characterised in that** it comprises
- pressure (34,35) and flow rate (27, 28, 32a) sensor means arranged in said body (1);
- electronically programmable means (32) responsive to signals coming from said sensors electrically connected with an external device and suitable for switching on or off said external device.

2. Multifunctional filter according to claim 1, wherein said sensor means are arranged in said body (1) between said filter cartridge (40) and said outlet mouth (22).

3. Multifunctional filter according to claim 1, wherein said body (1) is formed by
- a head (20) in which said openings of inlet (21) of outlet (22) are made,
- a lid (30) that stops said head (20) and houses said electronically programmable means (32) and said sensor means ;
- a cartridge container (10), releasably fastened to said head (20) and suitable for pushing against said head (20) said filter cartridge (40);
- flow chambers (23a, 26, 29) made in said head (20) so that said cartridge (40) filters completely the liquid that passes through it flowing from said inlet mouth (21) to said outlet mouth (22).

4. Multifunctional filter according to claim 1, wherein said sensor means and said electronically programmable means (32) are integrated on a single electronic board.

5. Multifunctional filter according to claim 4, wherein said electronic board comprises two microcircuits for detecting flow rate (27, 28, 32a) and pressure (34,35) integrated in a single microchip.

6. Multifunctional filter according to claim 1, wherein said pressure sensor means comprise a piston (35) slidable with respect to said body (1) and pushed at one side by resilient means (35a) and at another side by the pressure of the liquid present in said body (1), said piston operating a switch (34) associated to said electronic control means (32).

7. Multifunctional filter according to claim 1, wherein said flow rate sensor means comprise an element (27) movable with respect to said body (1) proportionally to the flow, the measure of the flow rate being obtained from the measure of the movement (28, 32a) of said movable element.

8. Multifunctional filter according to claim 1, wherein said flow rate sensor means comprise a impeller that rotates in said body (1), means being provided for litre counting (28, 32a) through said impeller, whereby it is possible to determine the speed of the fluid, the amount of fluid that passes through said filter in a certain time, the absence of fluid.

9. Multifunctional filter according to claim 1, wherein on said body (1) light means are mounted for signalling the operation of said filter responsive to signals coming from said sensors.
